# EUROPEAN PATENT SPECIFICATION

(11) **EP 3 616 909 B1**
(45) Date of publication and mention of the grant of the patent: **31.03.2021**
(21) Application number: 18382630.4
(22) Date of filing: 29.08.2018
(51) Int. Cl.: B32B 27/08, B32B 27/18, B32B 27/30, B32B 27/32, C08J 5/18

(54) **MULTILAYER FILMS FOR USE IN FLEXIBLE PACKAGING MATERIALS**
MEHRSCHICHTFILME ZUR VERWENDUNG IN FLEXIBLEN VERPACKUNGSMATERIALIEN
FILMS MULTICOUCHES DESTINÉS À ÊTRE UTILISÉS DANS DES MATÉRIAUX D'EMBALLAGE SOUPLES

(43) Date of publication of application: 04.03.2020
(73) Proprietor: Dow Global Technologies LLC, Midland, MI 48641 (US)
(72) Inventor: OLSZYNSKI, Przemyslaw, 8810 Horgen (CH); ARROYO VILLAN, María Isabel, 43006 Tarragona (ES); SANDKUEHLER, Peter Hermann Roland, 8810 Horgen (CH)
(74) Representative: Elzaburu S.L.P.

(56) References cited:
- EP-A1- 3 260 295
- WO-A1-2017/024576
- WO-A1-2018/118362
- WO-A1-2018/187438
- US-A1- 2006 177 641

## Description

### TECHNICAL FIELD

Embodiments described herein relate generally to multilayer films for use in flexible packaging materials, and more particularly to adhesive-free multilayer films having a polyethylene film extrusion coated on a second polyethylene film for use in flexible packaging materials.

### BACKGROUND

Improved sustainability is a continual goal for flexible packaging manufacturers. To achieve this goal, packaging materials made with monomaterial polymers have been considered, because flexible packaging materials, such as flexible pouches, when made from one polymer family, are more easily recyclable.

Conventional flexible packaging materials include polymer substrates using multiple polymer families e.g., polyester (PET) as the print film and polyethylene (PE) for the sealant film. For products that may require further enhancement in barrier properties, additional layers of aluminum foil, metallized films, or barrier resins may be included. Conventional flexible packaging materials further include adhesives that may make recyclability a challenge.

In addition, maintaining or improving optical properties is a continual goal in flexible packaging; however, there is a tradeoff in optical properties when moving to monomaterial packaging materials, particularly without the use of adhesives. Accordingly, there is a need for monomaterial polyethylene materials which maintain desired optical properties while improving sustainability. WO2017210087 discloses a coated film and packages.

### SUMMARY

Various embodiments of the present disclosure meet those needs and are directed to polyethylene film structures that achieve desired sustainability, strength, and optical properties, such as gloss, without the use of adhesives.

According to at least one embodiment of the present disclosure, a multilayer film is provided. The multilayer film comprises a first film comprising at least a first layer and a second layer, and a second film extrusion coated onto the first layer of the first film, wherein the multilayer film is free of adhesives. The first layer of the first film comprises a first high density polyethylene (HDPE) having a density of from 0.935 to 0.965 g/cc and a melt index **I**₂ of 0.3 to 2.0 and the second layer of the first film comprises a polyolefin plastomer having a density of from 0.885 to 0.910 g/cc. The second film comprises a second high density polyethylene (HDPE) having a density of from 0.945 to 0.965 g/cc and a melt index I₂ of 4.0 to 20.0. The second film has a gloss of from 65% to 95% at 60° according to ASTM D2457.

These and other embodiments are described in more detail in the following Detailed Description.

### DETAILED DESCRIPTION

The term "polymer" refers to a polymeric compound prepared by polymerizing monomers, whether of the same or a different type. The generic term polymer thus embraces the term "homopolymer", usually employed to refer to polymers prepared from only one type of monomer as well as "copolymer" which refers to polymers prepared from two or more different monomers. The term "interpolymer," as used herein, refers to a polymer prepared by the polymerization of at least two different types of monomers. The generic term interpolymer thus includes copolymers, and polymers prepared from more than two different types of monomers, such as terpolymers.

"Polyethylene" or "ethylene-based polymer" shall mean polymers comprising greater than 50% by mole of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m- LLDPE); Medium Density Polyethylene (MDPE); and High Density Polyethylene (HDPE).

The term "ULDPE" is defined as a polyethylene-based copolymer having a density in the range of 0.895 to 0.915 g/cc.

The term "LDPE" may also be referred to as "high pressure ethylene polymer" or "highly branched polyethylene" and is defined to mean that the polymer is partly or entirely homopolymerized or copolymerized in autoclave or tubular reactors at pressures above 14,500 psi (100 MPa) with the use of free-radical initiators, such as peroxides (see for example U.S. Pat. No. 4,599,392). LDPE resins typically have a density in the range of 0.916 to 0.940 g/cc.

The term "LLDPE", includes both resin made using the traditional Ziegler-Natta catalyst systems as well as single-site catalysts such as metallocenes (sometimes referred to as "m-LLDPE"). LLDPEs contain less long chain branching than LDPEs and include the substantially linear ethylene polymers which are further defined in U.S. Pat. No. 5,272,236, U.S. Pat. No. 5,278,272, U.S. Pat. No. 5,582,923 and U.S. Pat. No. 5,733,155; the homogeneously branched linear ethylene polymer compositions such as those in U.S. Pat. No. 3,645,992; the heterogeneously branched ethylene polymers such as those prepared according to the process disclosed in U.S. Pat. No. 4,076,698; and/or blends thereof (such as those disclosed in U.S. Pat. No. 3,914,342 or U.S. Pat. No. 5,854,045). The linear PE can be made via gas-phase, solution-phase or slurry polymerization or any combination thereof, using any type of reactor or reactor configuration known in the art, including but not limited to gas and solution phase reactors.

The term "HDPE" refers to polyethylenes having densities greater than about 0.940 g/cc, which are generally prepared with Ziegler-Natta catalysts, chrome catalysts or even metallocene catalysts.

The term "propylene-based polymer," as used herein, refers to a polymer that comprises, in polymerized form, a majority amount of propylene monomer (based on the total weight of the polymer) and optionally may comprise at least one polymerized comonomer.

The terms "flexible packaging" or "flexible packaging material" encompass various non-rigid containers familiar to the skilled person. These may include pouches, stand-up pouches, pillow pouches, bulk bags, pre-made packages.

As used herein, the term, "monomaterial" means that the multilayer films are composed substantially of polyethylene, wherein "substantially" means at least 95 wt% polyethylene, or at least 99 wt% polyethylene, or at least 99.5 wt% polyethylene, or at least 99.9 wt% based on the overall number of moles of the multilayer film, or 100 wt% polyethylene.

As used herein, the "print film" refers to an outer film of the multilayer film which is the film in which printing is performed in the production of flexible packages. The term "outer" is not to be construed as the outermost layer as some embodiments contemplate additional layers externally disposed on the print film, such as print primer layers, barrier layers, overprint varnish layers, or other layers known to the person skilled in the art of flexible packaging.

As used herein, "sealant film" refers to an inner film of the multilayer film structure that includes a sealant layer disposed internally relative to the print film. In some embodiments, the sealant film is a monolayer film, while in other embodiments the sealant film includes multiple layers, one of which is a sealant layer. In embodiments in which the sealant film includes multiple layers, the sealant film may include one or more additional layers internally disposed between the layer in contact with the extrusion coating and the sealant layer, for example, barrier layers, structural layers.

As used herein, "extrusion coating" refers to an extrusion coated layer of the multilayer film disposed on the sealant film. In some embodiments, the extrusion coating is a print protection film. In other embodiments, the print may be applied to the outside of the extrusion coating after the extrusion coating has been applied to the sealant film.

As used herein, "adhesive" refers to a polyurethane- or acrylic-based liquid adhesive that is applied between two film surfaces, for example, the extrusion coating and the sealant film and undergoes curing to bond the two film surfaces to one another.

Reference will now be made in detail to various multilayer film embodiments of the present disclosure, specifically, multilayer films used in articles such as flexible packaging materials. In one embodiment, the multilayer film comprises a first film comprising at least a first layer and a second layer, and a second film extrusion coated onto the first layer of the first film, wherein the multilayer film is free of adhesives. The first layer of the first film comprises a first high density polyethylene (HDPE) having a density of from 0.935 to 0.965 g/cc and a melt index **I**₂ of 0.3 to 2.0 and the second layer of the first film comprises a polyolefin plastomer having a density of from 0.885 to 0.910 g/cc. The second film comprises a second high density polyethylene (HDPE) having a density of from 0.945 to 0.965 g/cc and a melt index **I**₂ of 4.0 to 20.0. The second film has a gloss of from 65% to 95% at 60° according to ASTM D2457.

### Sealant Film

In one or more embodiments, the first film is a sealant film that includes at least first and second layers. In some embodiments, the sealant film comprises at least three layers, specifically a middle layer, an inner layer disposed between second film and the middle layer, and an outer layer. The sealant film may comprise or consist of ethylene-based polymer layers.

The first layer of the sealant film is a printed layer in various embodiments that receives an ink layer and the extrusion coating. The first layer may include a polyethylene composition which provides stiffness and resists gelling during the cast film or blown film extrusion processes. In one embodiment, the first layer comprises at least 70% by weight high density polyethylene (HDPE) having a density from 0.935 to 0.965 g/cc and a melt index (I₂) from 0.3 to 2.0 g/10 min, wherein I₂ is measured according to ASTM D1238 at 190 °C and 2.16 kg load.

Various methodologies are contemplated for producing the HDPE, a polyethylene copolymer produced from the polymerization of ethylene and one or more α-olefin comonomers in the presence of one or more catalysts, such as a Ziegler-Natta catalyst, a Phillips catalyst, a metallocene catalyst, a post-metallocene catalyst, a constrained geometry complex (CGC) catalyst, or a biphenyl phenol (BPP) complex catalyst. The α-olefin comonomers may include C₃-C₁₂ olefin monomers. In one embodiment, the α-olefin comonomer in the HDPE is 1-octene.

In further embodiments, the first layer of the sealant film may comprise at least 95% by weight HDPE, or at least 99% by weight HDPE, or 100% by weight HDPE. Without being limited by theory, the HDPE in the first layer provides the multilayer film with the stiffness to with withstand the stretching of the high speed printing processes. Additionally, the HDPE of the sealant film may have a density from 0.935 to 0.965 g/cc, or from 0.940 to 0.965 g/cc. In further embodiments, the melt index (I₂) may be from 0.3 to 4.0 g/10 min, from 0.3 to 3.0 g/10 min, from 0.3 to 2.0 g/10 min or from 0.3 to 1.5 g/10 min, or from 0.5 to 1.0 g/10 min. Various commercial products are considered suitable, for example, ELITE™ 5960G, ELITE™ 5940ST, DOWLEX™ 2740G from The Dow Chemical Company (Midland, MI), or other HDPE products having a suitable density and melt index I₂. Other suitable HDPEs include those described in PCT Publication No. WO 2017/099915.

The sealant film further comprises a second layer comprising a low density polyolefin plastomer which acts as a low temperature sealing layer. In various embodiments, the polyolefin plastomer can be a polyethylene plastomer or a polypropylene plastomer. Polyolefin plastomers may include resins made using single-site catalysts such as metallocenes and constrained geometry catalysts. The polyolefin plastomer has a density of 0.885 to 0.910 g/cm³. All individual values and subranges from 0.885 g/cm³ to 0.910 g/cm³ are included herein and disclosed herein; for example, the density of the polyolefin plastomer can be from a lower limit of 0.895, 0.900, or 0.905 g/cm³ to an upper limit of 0.905, 0.910, or 0.915 g/cm³. In some embodiments, the polyolefin plastomer has a density from 0.885 to 0.907 g/cm³ or from 0.885 to 0.902 g/cm³.

In some embodiments, the polyolefin plastomer has a melt index (I₂) of up to 20 g/10 minutes. All individual values and subranges up to 20 g/10 minutes are included herein and disclosed herein. For example, the polyolefin plastomer can have a melt index to an upper limit of 1.0, 2.0, 3.0, 4.0, 5.0, 6.0, 7.0, 8.0, 9.0, 10.0, 11, 12, 13, 14, 15, 16, 17, 18, 19, or 20 g/10 minutes. In a particular aspect of the invention, the polyolefin plastomer has an I₂ with a lower limit of 0.5 g/10 minutes. One factor in identifying a melt index for the polyolefin plastomer is whether the second layer will be manufactured as a blown film or a cast film.

Examples of polyolefin plastomers that can be used in the second layer include those commercially available from The Dow Chemical Company under the name AFFINITY™ including, for example, AFFINITY™ PL 1881G and AFFINITY™ PF1140G.

In some embodiments, the sealant film may include additional layers between the first and second layers. For example, in embodiments, the sealant film may include a third layer that includes one or more ethylene-based polymers. The third layer may include HDPE, LDPE, a combination of HDPE and LDPE. In some embodiments, the sealant film may include three additional layers in between the first and second layers, two of which are tie layers which bond a barrier layer (e.g., an EVOH layer) to the first and second layers. Additional layers are contemplated, although it should be understood that such additional layers are optional in some embodiments.

### Extrusion Coating

In various embodiments, a second film, sometimes referred to herein as an extrusion coated layer or extrusion coated film, is extrusion coated onto the first layer of the first film. The second film, which may in some embodiments be considered a print protective film, provides the aesthetic benefits (e.g., gloss and clarity) to the multilayer film. In one or more embodiments, the second film may enable the multilayer film to achieve a gloss value of at least 65%, wherein gloss is measured at 60° according to ASTM D2457.

The second film comprises a second high density polyethylene (HDPE) having a density of from 0.945 g/cc to 0.965 g/cc and a melt index **I**₂ of 4.0 to 20.0 g/10 min, where **I**₂ is measured according to ASTM D1238 at 190 °C and 2.16 kg load. As provided above, various methodologies are contemplated for producing the HDPE of the second film.

In various embodiments, the second film comprises an inner layer and an outer layer, which may have the same formulations or different formulations. In one or more embodiments, the inner layer is in contact with the first layer of the sealant film. The outer layer, in some embodiments, comprises the second HDPE. In one or more embodiments, the outer layer comprises, or consists of, 100% by weight of the second HDPE. However, in other embodiments, outer layer may include the second HDPE and an LDPE or other polyethylene-based polymer. In such embodiments, the outer layer may comprise from 50 % to 99 %, from 55 % to 95 %, from 60 % to 90 %, from 65 % to 85 %, or from 75% to 95 % by weight of the second HDPE. In embodiments, the inner layer has a thickness of from 5 µm to 10 µm, or from 7 µm to 9 µm. The outer layer may have a thickness of from 1 µm to 5 µm, or from 2 µm to 4 µm. The thickness of the second film may vary depending on the particular embodiment. However, in various embodiments, the second film has a coat weight of from 9 g/m² to 20 g/m², from 10 g/m² to 18 g/m², or from 11 g/m² to 15 g/m². In some embodiments, the second film has a coat weight of less than 12 g/m². Such coat weights enable the second film to provide protection for the ink while maintaining good clarity.

The inner layer of various embodiments includes an HDPE and a low density polyethylene (LDPE). The HDPE of the inner layer has a density of from 0.935 to 0.965 g/cc, or from 0.940 to 0.965 g/cc. In further embodiments, the melt index (I₂) may be from 4.0 to 15.0 g/10 min, or from 5.0 to 15.0 g/10 min. The HDPE and the LDPE of the inner layer may be blended together to form the inner layer, or the HDPE and the LDPE may be coextruded to form the inner layer.

In one or more embodiments, the LDPE of the inner layer of the second film may have a density from 0.915 to 0.930 g/cc, or from 0.915 g/cc to 0.925 g/cc. Moreover, the melt index (I₂) of the LDPE may be from 1.0 to 15.0 g/10 min, or from 1.0 to 10.0 g/10 min, or from 2.5 to 10.0 g/10 min.

In one or more embodiments, the LDPE compositions may include antiblock agent, slip agent, or both. Various commercial LDPE products are considered suitable for the inner layer of the second film, for example, AGILITY™ EC7000, AGILITY™ EC7220, DOW™ LDPE 7008 and DOW™ LDPE 7004, all of which are available from The Dow Chemical Company (Midland, MI).

In embodiments wherein the second film comprises LDPE, the second film may include less than or equal to 30% by weight LDPE, or less than or equal to 25 % by weight LDPE. In one embodiment, the inner layer may comprise from 5 to 30% by weight LDPE. In a further embodiment, the inner layer may include from 5 to 25% by weight LDPE. In yet another embodiment, the inner layer may include from 5 to 10% by weight LDPE. In embodiments, the LDPE may provide improved optical properties, such as gloss and clarity, while also enhancing processibility of the extrusion coating.

Although described in various embodiments as a multilayer film (e.g., including an outer layer and an inner layer), in embodiments the extrusion coating may be a monolayer film. For example, the HDPE and LDPE may be blended together to form a single layer instead of being coextruded as multiple layers.

In various embodiments described herein, the second film has a gloss of from 65% to 95% at 60° according to ASTM D2457. In some particular embodiments, the second film has a gloss of from 70% to 90% or from 80% to 85%.

The second film may further have a melting point (highest differential scanning calorimetry (DSC) melting peak temperature) of from 110 °C to 135 °C.

In addition to the components of the sealant film and extrusion coated film described above, other polymeric additives may be included, such as, ultraviolet light absorbers, antistatic agents, pigments, dyes, nucleating agents, fillers, slip agents, fire retardants, plasticizers, processing aids, lubricants, stabilizers, smoke inhibitors, viscosity control agents and anti-blocking agents. In specific embodiment, slip agents, anti-blocking agents, or both are included with one or more of the polymers of the sealant film and/or the extrusion coated film. However, in various embodiments, the multilayer film includes greater than 95% by weight of ethylene-based polymer based on the total weight of the multilayer film. In some embodiments, the multilayer film includes greater than 98% by weight of ethylene-based polymer, or even greater than 99% by weight of ethylene-based polymer based on the total weight of the multilayer film.

While the above discussion focuses on a multilayer film having an overall thickness of less than 150 µm, various additional thickness and layer configurations are also suitable. For example, it is contemplated that the multilayer film may include more than the first and second layers described herein above. For example, the multilayer film may include a layer of ink between the first film and the second film. The layer of ink may be, for example, in the form of images or words. In such embodiments, the layer of ink may be printed on the first film and the second layer may be extruded over the layer of ink, as will be described in greater detail below.

As stated above, the multilayer films are imparted with a unique combination of high gloss and high stiffness without the use of adhesives. In one embodiment, the multilayer film may have an apparent bending modulus of greater than 0.014 N/mm² for a multilayer film having a thickness of less than 150 µm as measured in accordance with ASTM D747.

### Methods for Producing the Flexible Package

Various methodologies are contemplated for producing the sealant films, and the extrusion coated films. For example, the multilayer sealant films may prepared by cast film extrusion, or blown film extrusion. The multilayer extrusion coated films may be prepared by flat die film extrusion.

After the sealant film has been blown or cast, the sealant film may undergo a printing process. Various printing processes are considered suitable for the cast or blown print films. These printing processes may include, but are not limited to rotogravure printing, flexographic printing, and offset printing. In specific embodiments, the sealant films may undergo rotogravure printing. In specific embodiments, the sealant films are reverse rotogravure printed at the print speeds typically utilized for a conventional PET/PE laminate. The tension between rollers in the rotogravure machine may cause overstretching of conventional films leading to poor print registration. Without being bound by theory, the present sealant films are believed to have the requisite stiffness to prevent overstretching and thereby achieve the desired printing performance. In one or more embodiments, the present sealant films may stretch less than 2 mm on a rotogravure print machine whereas conventional polyethylene print films which may stretch about 6 mm.

In other embodiments, the extrusion coated film may be coated directly on the sealant film and the multilayer film undergo a printing process such that the print is applied over extrusion coated film. However, in such embodiments, the extrusion coated film may not provide protection to the layer of ink.

Alternatively, various additional processes may be used to produce flexible packages from the laminate structures. These may include heat sealing or other processes familiar to the person skilled in the art.

### TESTING METHODS

The test methods include the following:

### Melt index (I₂)

Melt index (I₂) was measured in accordance to ASTM D-1238 at 190°C at 2.16 kg. Melt index (I₁₀) was measured in accordance to ASTM D-1238 at 190°C at 10 kg. The values are reported in g/10 min, which corresponds to grams eluted per 10 minutes.

### Density

Samples for density measurement were prepared according to ASTM D4703 and reported in grams/cubic centimeter (g/cc or g/cm³). Measurements were made within one hour of sample pressing using ASTM D792, Method B.

### Gloss

Gloss was measured at 60° according to the ASTM D2457 method. Reported values are the average of the gloss measured for five samples.

### Melting Point

DSC is used to measure the melting and crystallization behavior of a polymer over a wide range of temperatures. For example, the TA Instruments Q1000 DSC, equipped with an RCS (refrigerated cooling system) and an autosampler is used to perform this analysis. The instrument is first calibrated using the software calibration wizard. A baseline is obtained by heating a cell from -80 °C to 280 °C without any sample in an aluminum DSC pan. Sapphire standards are then used as instructed by the calibration wizard. Next, 1 to 2 milligrams (mg) of a fresh indium sample are analyzed by heating the standards sample to 180 °C, cooling to 120 °C at a cooling rate of 10 °C/minute, and then keeping the standards sample isothermally at 120 °C for 1 minute. The standards sample is then heated from 120 °C to 180 °C at a heating rate of 10 °C/minute. Then, it is determined that indium standards sample has heat of fusion (H_{f}) = 28.71 ± 0.50 Joules per gram (J/g) and onset of melting = 156.6 °C ± 0.5 °C. Test samples are then analyzed on the DSC instrument.

During testing, a nitrogen purge gas flow of 50 ml/min is used. Each sample is melt pressed into a thin film at about 175 °C; the melted sample is then air-cooled to room temperature (approx. 25 °C). The film sample is formed by pressing a "0.1 to 0.2 gram" sample at 175 °C at 1,500 psi, and 30 seconds, to form a "0.1 to 0.2 mil thick" film. A 3-10 mg, 6 mm diameter specimen is extracted from the cooled polymer, weighed, placed in a light aluminum pan (ca 50 mg), and crimped shut. Analysis is then performed to determine its thermal properties.

The thermal behavior of the sample is determined by ramping the sample temperature up and down to create a heat flow versus temperature profile. First, the sample is rapidly heated to 180 °C, and held isothermal for five minutes, in order to remove its thermal history. Next, the sample is cooled to -40 °C, at a 10 °C/minute cooling rate, and held isothermal at -40 °C for five minutes. The sample is then heated to 150 °C (this is the "second heat" ramp) at a 10 °C/minute heating rate. The cooling and second heating curves are recorded. The cool curve is analyzed by setting baseline endpoints from the beginning of crystallization to -20 °C. The heat curve is analyzed by setting baseline endpoints from - 20 °C to the end of melt. The values determined are peak melting temperature (Tₘ), peak crystallization temperature (T_{c}), onset crystallization temperature (Tc onset), heat of fusion (H_{f}) (in Joules per gram), and the calculated % crystallinity for polyethylene samples using: % Crystallinity for PE = ((Hf)/(292 J/g)) x 100, and the calculated % crystallinity for polypropylene samples using: % Crystallinity for PP = ((Hf)/165 J/g)) x 100. The heat of fusion (H_{f}) and the peak melting temperature are reported from the second heat curve. Peak crystallization temperature and onset crystallization temperature are determined from the cooling curve.

### Oxygen Transmission Rate

Oxygen Transmission Rate is measured at 23 °C at 75% RH according to ASTM D3985.

### Water Vapor Transmission Rate

Water Vapor Transmission Rate is measured at 38 °C at 90% RH according to ASTM E-398.

### Apparent Bending Modulus

The apparent bending modulus is measured in accordance with ASTM D747.

### EXAMPLES

A description of the raw materials used in the examples is as follows:
HDPE1 is a Ziegler-Natta catalyzed high density polyethylene having a density of 0.950 g/cm³ and a melt index (I₂) of 1.5 g/10 minutes that is prepared as described for Inventive Resin 1 in WO 2017/099915;
POLYBATCH® AMF 705 HF is a processing aid available from A. Schulman;
POLYBATCH® VLA 55 is an anti-static additive available from A. Schulman;
POLYBATCH® NG 8160 is an additive available from A. Schulman;
AFFINITY™ 1881G is an ethylene/octene plastomer available from The Dow Chemical Company (Midland, MI);
DOW™ LDPE 310E is an LDPE available from The Dow Chemical Company (Midland, MI);
ADCOTE™ L719A is a solvent-based polyurethane adhesive available from The Dow Chemical Company (Midland, MI); and
MORFREE™ LPLUS 1 is a solventless adhesive available from The Dow Chemical Company (Midland, MI).

In the following experiment, a multilayer film (Example 1) in accordance with the present disclosure was compared with a conventional PET/PE laminate having a conventional PE film adhered to a conventional PET print film (Comparative Example 1), a PE/PE laminate having a conventional PE film adhered to a conventional PE print film (Comparative Example 2), and a lacquer-coated conventional PE print film (Comparative Example 3). Table 1, as follows, lists the compositions of these multilayer films studied herein.

For Example 1, Comparative Example 2, and Comparative Example 3, the sealant layer includes three layers, A, B, and C, in which layer C is a low temperature sealing layer. Layer A includes 98.5% HDPE1, 1% POLYBATCH AMF 705 HF, and 0.5% POLYBATCH VLA 55. Layer B includes 84% HDPE1 and 16% POLYBATCH NG 8160. Layer C includes 84% AFFINITY 1881G, 14.5% LDPE 310E, 1% POLYBATCH AMF 705 HF, and 0.5% POLYBATCH VLA 55. The sealant layer of Comparative Example 1 is a film including a low temperature sealing layer and layers containing LLDPE and/or LDPE. The lacquer of Comparative Example 3 is a commercially available lacquer for providing thermal resistance.

**Table 1:**

| **Table 1: Multilayer Film Structures** | | | | |
|---|---|---|---|---|
| | **Example 1** | **Comp. Ex. 1** | **Comp. Ex. 2** | **Comp. Ex. 3** |
| Sealant Layer | 16 µm C | 90 µm film | 16 µm C | 16 µm C |
| | 64 µm B | | 55 µm B | 70 µm B |
| | 20 µm A | | 18 µm A | 22 µm A |
| **Total Sealant Layer Thickness** | 100 µm | 90 µm | 89 µm | 108 µm |
| Printing | 1.5 µm ink | N/A | N/A | N/A |
| Adhesive | N/A | 2.5 µm ADCOTE™ L719A | 2.5 µm MORFREE™ LPLUS 1 | N/A |
| Printing | N/A | 1.5 µm Ink | 1.5 µm Ink | 1.5 µm Ink |
| Print Protection Layer | 3 µm | 12 µm PET | 18.5 µm | 2.5 µm |
| | HDPE/20% | | HDPE1 film | Lacquer |
| | LDPE blend | | | |
| | 8 µm | | | |
| | HDPE/20% | | | |
| | LDPE blend | | | |
| | Extrusion | | | |
| | Coating | | | |
| **Total Thickness** | 112.5 µm | 106 µm | 111.5 µm | 112 µm |
| **Gloss** | 83.8% ± 0.77 | 81.6% ± 1.45 | 11.8% ± 2.32 | 58.4% ± 0.95 |

For Example 1, the extrusion coating was a blend of 20 wt% AGILITY™ EC 7220 (an LDPE having a density of 0.918 g/cm³ measured in accordance with ASTM D792 and a melt index **I**₂ of 1.5 g/10 minutes measured in accordance with ASTM D1238 at 190 °C and 2.16 kg) and DOWLEX™ 2006 (a polyethylene product having a density of 0.961 g/cm³ measured in accordance with ASTM D792 and a melt index **I**₂ of 8.0 g/10 minutes measured in accordance with ASTM D1238 at 190 °C and 2.16 kg).

### Multilayer Film Synthesis

The film extrusion processes used to make the multilayer films of Table 1 were conducted on a Kaschier (Germany) blown film line. The blown film line had the following properties as listed in Table 2 as follows.

**Table 2:**

| **Table 2: Blown Film Line Parameters** | |
|---|---|
| Die diameter | 400 mm |
| (BUR) | 1:2.1 |
| Bubble cooling | 15 °C |
| Output | 313 kg/h |
| Lay Flat width | 1350 mm |
| Linear film speed | 20.6 m/min |

Table 3 lists the temperature profile of the blown film line i.e., the temperatures at different locations of the blown film line.

**Table 3:**

| **Table** 3: **Temperature Profile (°C** | | | | |
|---|---|---|---|---|
| | **Outer Layer (A)** | **Middle Layer (B)** | **Inner Layer (C)** | **Die** |
| Extruder Zone 1 | 185 | 195 | 185 | 195 |
| Extruder Zone 2 | 185 | 195 | 185 | 195 |
| Extruder Zone 3 | 190 | 200 | 190 | 195 |
| Extruder Zone 4 | 195 | 200 | 195 | 195 |
| Extruder Zone 5 | 195 | 205 | 195 | 195 |
| Extruder Zone 6 | 195 | 205 | 195 | 195 |

| **Table** 3: **Temperature Profile (°C** | | | | |
|---|---|---|---|---|
| | **Outer Layer (A)** | **Middle Layer (B)** | **Inner Layer (C)** | **Die** |
| Extruder Zone 7 | -- | -- | -- | 195 |
| Extruder Zone 8 | -- | -- | -- | 200 |
| Extruder Zone 9 | -- | -- | -- | 200 |
| Extruder Zone 10 | -- | -- | -- | 200 |

For Example 1, an extrusion coating having the composition described in Table 1 was applied to the blown film using the following conditions: SML extrusion coating line; coating melt temperature of 309 °C; air gap of 280 mm; and chill roll temperature of - 16-18 °C.

### Experimental Results

In the present experiments, gloss, oxygen transmission rate (OTR), water vapor transmission rate (WVTR), and stiffness were measured on Example 1 and Comparative Examples 1-3. The results are provided in Table 4 as follows.

**Table 4:**

| **Table 4: Mechanical and Optical Properties of Multilayer Films** | | | | |
|---|---|---|---|---|
| | **Example 1** | **Comp. Ex. 1** | **Comp. Ex. 2** | **Comp. Ex. 3** |
| Gloss | 83.8 | 81.6 | 11.8 | 58.4 |
| OTR at 23 °C and 75% RH (cc/m²/day) | 593 | 134 | 635 | 625 |
| WVTR at 38 °C and 90% RH (g/m²/day) | 1.57 | 3.38 | 1.45 | 1.4 |
| Bending Modulus (N/mm²) | 0.015 | 0.014 | 0.013 | 0.015 |

As demonstrated by the data in Table 4, Example 1 including the extrusion coating exhibits improved gloss at 60° as compared to Comparative Example 2 and Comparative Example 3 while maintaining a similar OTR or WVTR. The extrusion coating further exhibits similar apparent bending modulus to each of the comparative examples.

Accordingly, various embodiments described herein provide for multilayer polyethylene film structures that achieve desired sustainability, strength, and optical properties, such as gloss, without the use of adhesives.

## Claims

1. A multilayer film comprising:
a first film comprising at least a first layer and a second layer wherein:
the first layer comprises a first high density polyethylene (HDPE) having a density of from 0.935 to 0.965 g/cc and a melt index **I**₂ of 0.3 to 2.0 g/10 min, wherein **I**₂ is measured according to ASTM D1238 at 190 °C and 2.16 kg load; and
the second layer comprises a polyolefin plastomer having a density of from 0.885 to 0.910 g/cc; and
a second film extrusion coated onto the first layer of the first film, the second film comprising a second high density polyethylene (HDPE) having a density of from 0.945 to 0.965 g/cc and a melt index **I**₂ of 4.0 to 20.0 g/10 min,
wherein the density of the first HDPE, the polyolefin plastomer, and the second HDPE are measured in accordance with ASTM D792, Method B,
wherein the multilayer film is free of adhesives; and
wherein the second film has a gloss of from 65% to 95% at 60° according to ASTM D2457.

2. The multilayer film of claim 1, wherein the second film comprises:
an inner layer comprising a blend of a low density polyethylene (LDPE) having a density of from 0.915 to 0.930 g/cc and a high density polyethylene (HDPE) having a density of from 0.935 to 0.965 g/cc; and
an outer layer comprising the second HDPE.

3. The multilayer film of claim 2, wherein the outer layer comprises 100% by weight of the second HDPE.

4. The multilayer film of any preceding claim, wherein the second film comprises 30 wt% or less of a low density polyethylene (LDPE) having a density of from 0.915 to 0.930 g/cc.

5. The multilayer film of any preceding claim, wherein the multilayer film comprises greater than 95 % by weight of ethylene-based polymer based on the total weight of the multilayer film.

6. The multilayer film of any preceding claim, wherein the multilayer film comprises greater than 98 % by weight of ethylene-based polymer based on the total weight of the multilayer film.

7. The multilayer film of any preceding claim, wherein the multilayer film has an overall thickness of less than 150 µm and a bending stiffness of greater than 0.014 Nmm as measured in accordance with ASTM D790.

8. The multilayer film of any preceding claim, wherein the extrusion coating has a coat weight from 9 g/m² to 20 g/m².

9. The multilayer film of any preceding claim, wherein the extrusion coated film has a highest differential scanning calorimetry (DSC) melting peak temperature of from 110 °C to 135 °C.

10. The multilayer film of any preceding claim, further comprising a layer of ink between the first film and the second film.

11. An article comprising the multilayer film of any preceding claim, wherein the article is a flexible packaging material.

12. The article of claim 11, wherein the flexible packaging material is a stand up pouch.

## Patentansprüche

1. Eine Mehrschichtfolie, die Folgendes beinhaltet:
eine erste Folie, die mindestens eine erste Schicht und eine zweite Schicht beinhaltet, wobei:
die erste Schicht ein erstes Polyethylen hoher Dichte (HDPE) beinhaltet, das eine Dichte von 0,935 bis 0,965 g/cm³ und einen Schmelzindex **I**₂ von 0,3 bis 2,0 g/10 min aufweist, wobei I₂ gemäß ASTM D1238 bei 190 °C und 2,16 kg Last gemessen ist; und
die zweite Schicht ein Polyolefinplastomer beinhaltet, das eine Dichte von 0,885 bis 0,910 g/cm³ aufweist; und
eine zweite Folie, mit der die erste Schicht der ersten Folie extrusionsbeschichtet ist, wobei die zweite Folie ein zweites Polyethylen hoher Dichte (HDPE) beinhaltet, das eine Dichte von 0,945 bis 0,965 g/cm³ und einen Schmelzindex I₂ von 4,0 bis 20,0 g/10 min aufweist,
wobei die Dichte des ersten HDPE, des Polyolefinplastomers und des zweiten HDPE in Übereinstimmung mit ASTM D792, Verfahren B, gemessen ist,
wobei die Mehrschichtfolie frei von Klebstoffen ist; und
wobei die zweite Folie einen Glanz von 65 % bis 95 % bei 60° gemäß ASTM D2457 aufweist.

2. Mehrschichtfolie gemäß Anspruch 1, wobei die zweite Folie Folgendes beinhaltet:
eine innere Schicht, die eine Mischung von einem Polyethylen niederer Dichte (LDPE), das eine Dichte von 0,915 bis 0,930 g/cm³ aufweist, und einem Polyethylen hoher Dichte (HDPE), das eine Dichte von 0,935 bis 0,965 g/cm³ aufweist, beinhaltet; und
eine äußere Schicht, die das zweite HDPE beinhaltet.

3. Mehrschichtfolie gemäß Anspruch 2, wobei die äußere Schicht zu 100 Gew.-% das zweite HDPE beinhaltet.

4. Mehrschichtfolie gemäß einem der vorhergehenden Ansprüche, wobei die zweite Folie zu 30 Gew.-% oder weniger ein Polyethylen niederer Dichte (LDPE), das eine Dichte von 0,915 bis 0,930 g/cm³ aufweist, beinhaltet.

5. Mehrschichtfolie gemäß einem der vorhergehenden Ansprüche, wobei die Mehrschichtfolie zu mehr als 95 Gew.-%, bezogen auf das Gesamtgewicht der Mehrschichtfolie, Polymer auf Ethylenbasis beinhaltet.

6. Mehrschichtfolie gemäß einem der vorhergehenden Ansprüche, wobei die Mehrschichtfolie zu mehr als 98 Gew.-%, bezogen auf das Gesamtgewicht der Mehrschichtfolie, Polymer auf Ethylenbasis beinhaltet.

7. Mehrschichtfolie gemäß einem der vorhergehenden Ansprüche, wobei die Mehrschichtfolie eine Gesamtdicke von weniger als 150 µm und eine Biegesteifigkeit von größer als 0,014 Nmm, wie in Übereinstimmung mit ASTM D790 gemessen, aufweist.

8. Mehrschichtfolie gemäß einem der vorhergehenden Ansprüche, wobei die Extrusionsbeschichtung ein Beschichtungsgewicht von 9 g/m² bis 20 g/m² aufweist.

9. Mehrschichtfolie gemäß einem der vorhergehenden Ansprüche, wobei die durch Extrusionsbeschichtung aufgebrachte Folie bei dynamischer Differenzkalorimetrie (DDK) eine höchste Schmelzspitzentemperatur von 110 °C bis 135 °C aufweist.

10. Mehrschichtfolie gemäß einem der vorhergehenden Ansprüche, die ferner eine Tintenschicht zwischen der ersten Folie und der zweiten Folie beinhaltet.

11. Ein Artikel, der die Mehrschichtfolie gemäß einem der vorhergehenden Ansprüche beinhaltet, wobei der Artikel ein flexibles Verpackungsmaterial ist.

12. Artikel gemäß Anspruch 11, wobei das flexible Verpackungsmaterial ein Standbodenbeutel ist.

## Revendications

1. Un film multicouche comprenant :
un premier film comprenant au moins une première couche et une deuxième couche où :
la première couche comprend un premier polyéthylène haute densité (PEHD) ayant une masse volumique allant de 0,935 à 0,965 g/cm³ et un indice de fluidité à chaud I₂ de 0,3 à 2,0 g/10 min, où I₂ est mesuré selon l'ASTM D1238 à 190 °C et avec une charge de 2,16 kg ; et
la deuxième couche comprend un plastomère de polyoléfine ayant une masse volumique allant de 0,885 à 0,910 g/cm³ ; et
un deuxième film revêtu par extrusion sur la première couche du premier film, le deuxième film comprenant un deuxième polyéthylène haute densité (PEHD) ayant une masse volumique allant de 0,945 à 0,965 g/cm³ et un indice de fluidité à chaud **I**₂ de 4,0 à 20,0 g/10 min,
où la masse volumique du premier PEHD, du plastomère de polyoléfine, et du deuxième PEHD est mesurée conformément à l'ASTM D792, Méthode B,
où le film multicouche est dépourvu d'adhésifs ; et
où le deuxième film a un brillant allant de 65 % à 95 % à 60° selon l'ASTM D2457.

2. Le film multicouche de la revendication 1, où le deuxième film comprend :
une couche interne comprenant un mélange homogène d'un polyéthylène basse densité (PEBD) ayant une masse volumique allant de 0,915 à 0,930 g/cm³ et d'un polyéthylène haute densité (PEHD) ayant une masse volumique allant de 0,935 à 0,965 g/cm³ ; et
une couche externe comprenant le deuxième PEHD.

3. Le film multicouche de la revendication 2, où la couche externe comprend 100 % en poids du deuxième PEHD.

4. Le film multicouche de n'importe quelle revendication précédente, où le deuxième film comprend 30 % en poids ou moins d'un polyéthylène basse densité (PEBD) ayant une masse volumique allant de 0,915 à 0,930 g/cm³.

5. Le film multicouche de n'importe quelle revendication précédente, où le film multicouche comprend plus de 95 % en poids de polymère à base d'éthylène rapporté au poids total du film multicouche.

6. Le film multicouche de n'importe quelle revendication précédente, où le film multicouche comprend plus de 98 % en poids de polymère à base d'éthylène rapporté au poids total du film multicouche.

7. Le film multicouche de n'importe quelle revendication précédente, où le film multicouche a une épaisseur globale de moins de 150 µm et une rigidité à la flexion de plus de 0,014 N mm telle que mesurée conformément à l'ASTM D790.

8. Le film multicouche de n'importe quelle revendication précédente, où le revêtement par extrusion a un poids de revêtement allant de 9 g/m² à 20 g/m².

9. Le film multicouche de n'importe quelle revendication précédente, où le film revêtu par extrusion a une température de pic de fusion par calorimétrie différentielle à balayage (DSC) la plus élevée allant de 110 °C à 135 °C.

10. Le film multicouche de n'importe quelle revendication précédente, comprenant en outre une couche d'encre entre le premier film et le deuxième film.

11. Un article comprenant le film multicouche de n'importe quelle revendication précédente, où l'article est un matériau d'emballage souple.

12. L'article de la revendication 11, où le matériau d'emballage souple est un sachet à maintien vertical.
